# EUROPÄISCHE PATENTANMELDUNG

(11) **EP 1 452 638 A1**
(43) Veröffentlichungstag der Anmeldung: **01.09.2004**
(21) Anmeldenummer: 04002765.8
(22) Anmeldetag: 09.02.2004
(51) Int. Cl.: D21B 1/32, D21F 1/66, D21D 5/24, B03D 1/14

(54) **Verfahren und Vorrichtung zur Belüftung von Suspensionen**

(30) Priorität: 25.02.2003 AT 2712003
(71) Anmelder: Andritz AG, 8045 Graz (AT)
(72) Erfinder: Gabl, Helmut, Dipl.Ing. Dr., A-8045 Graz (AT)
(74) Vertreter: Schweinzer, Friedrich

(57) **Zusammenfassung**

Die Erfindung betrifft ein Verfahren zur Belüftung von Suspensionen, insbesondere zur Flotation, beispielsweise beim Deinken von Faserstoffsuspensionen, mit einer oder mehreren Stufen und / oder Zellen P1, P2, P3, P4, S1, S2, wobei in jeder Stufe / Zelle P1, P2, P3, P4, S1, S2 ein eigener, getrennter Flüssigkeitskreislauf 6 vorgesehen ist. Zur Verbesserung der Schmutzpunkteabscheidung ist erfindungsgemäß vorgesehen, dass ein Cleaner 12, 12', 16, 18 zwischengeschaltet ist. Weiters betrifft die Erfindung eine Vorrichtung zur Durchführung des Verfahrens.

## Beschreibung

Die Erfindung betrifft ein Verfahren zur Belüftung von Suspensionen, insbesondere zur Flotation, beispielsweise beim Deinken von Faserstoffsuspensionen, mit einer oder mehreren Stufen und / oder Zellen, wobei in jeder Stufe / Zelle ein eigener, getrennter Flüssigkeitskreislauf vorgesehen ist. Weiters betrifft die Erfindung eine Vorrichtung zur Durchführung des Verfahrens.

Der Wiedereinsatz von hoch mineralhaltigen (Pigmente , wie Calciumcarbonat und Kaoline) drucktechnischen Erzeugnissen erfordert Prozessanpassungen beim Rezyklierprozess und der Wiederaufbereitung im Deinkingprozess.

Für den Recyclingprozess wird der damit verbunden Eintrag von Nichtfaserstoffen (Druckfarbe, Minerale etc) problematisch. Der Altpapieraufbereiter wird gezwungen den Überschuss an Druckfarben und mineralischen Stoffen gezielt zu entfernen. Die Deinking-Flotation ist ein Verfahren zur Abtrennung von Störstoffen und Druckfarbenpartikel aus insbesondere in der Altpapieraufbereitung hergestellten Faserstoffsuspensionen. Dieses Verfahren ist durch die Verwendung von Gasblasen bei der Abscheidung von Druckpartikeln nur bedingt geeignet gleichzeitig auch eine gezielte Schmutzpunktentfernung mit effizienter Entaschung und/ oder Feinstoffreduktion bei geringem Faserverlust zu erreichen.

Hydrophobe oder mittels oberflächenaktiven Stoffen hydrophobierte Feststoffe wie Druckfarbenpartikel etc. werden durch die anhaftenden Gasblasen an die Flüssigkeitsoberfläche getragen und können dort als Schaum entfernt werden. Je nach Prozessführung werden bei der Schaumentfernung Schmutzpunkte und Füllstoffe mehr oder weniger unspezifisch mitentfernt.

Ein Verfahren gemäß dem Oberbegriff von Anspruch 1 ist z.B. aus der EP 1 124 001 A2 oder der EP 1 262 593 A1 bekannt, wobei die einzelnen Flotationsstufen auch z.B. nach der US 4,255,262, EP 0 243 690, DE 31 20 202 oder US 6,208,549 ausgeführt sein können. Derartige Verfahren werden zur Abtrennung von Störstoffen und Druckfarbenpartikel aus insbesondere in der Altpapieraufbereitung hergestellten Faserstoffsuspensionen eingesetzt. Durch die Anwendung derartiger Verfahren wird eine unspezifische Abtrennung von mineralischen Bestandteilen (z.B. Füllstoffen etc.) bewirkt, da diese in der chemischen Oberflächen beschaffenheit (insbesondere Ladung) unterschiedlich zu den relativ leicht hydrophobierbaren Druckpartikeln in der Faserstoffsuspension reagieren. Zudem ist das spezifische Gewicht der mineralischen Anteile ca. doppelt bis dreifach höher als das der Druckpartikel. Bei den bekannten Verfahren treten jedoch bei der selektiven Flotation einige Nachteile auf. Wird z.B. versucht mittels Änderungen im Prozess eine gezielte Abscheidung von Füllstoffen zu erzielen, tritt zwangsläufig eine Reduktion der Effizienz in der Schmutzpunkte- und Druckfarbtrennung auf, wodurch zusätzliche Änderungen in der Begasung, Anpassungen an die Rohstoffschwankungen und Durchsatzänderungen erforderlich werden. Weiters steigt bei Erhöhung der Überlaufmenge für eine Erhöhung der Abscheidung der Schmutzpunkte und mineralischen Stoffe auch der Faserverlust im gleichen Verhältnis mit an, wodurch der Aufwand zur Entsorgung und der Rohstoffeinsatz erhöht werden. Schmutzpunkte lassen sich aufgrund der Partikelgröße und den vorliegenden Strömungswiderständen im Tank nur schwer aus dem Flotationsprozess abtrennen.

Die Erfindung hat das Ziel, bei Aufrechterhaltung der Strömungsführung und Begasung die obigen Nachteile zu reduzieren bzw. zu vermeiden.

Die Erfindung ist daher, dadurch gekennzeichnet, dass aus mindestens einem Flüssigkeitskreislauf die Schmutzpunkte selektiv abgeschieden werden, wobei die Schmutzpunktabscheidung in den Flüssigkeitskreislauf einer Zelle, beispielsweise einer Primär- oder Sekundärzelle, oder zwischen den Zellenstufen, d.h. zwischen Primär- und Sekundärzellen zwischengeschaltet sein kann. Dadurch wird es möglich, vornehmlich Schmutzpunkte aber auch Druckfarben in einfacher Weise selektiv abzuscheiden.

Wird die Faserstoffsuspension vor Eintritt in die Sekundärzellen auf ca. 0,4 - 1,7 % Stoffdichte, insbesondere 0,8 - 1,3 % Stoffdichte, verdünnt, so kann die Flotationseffizienz gesteigert werden.

Wenn gemäß einer vorteilhaften Weiterbildung der Erfindung zumindest in den Kreislauf zweier Zellen je eine Schmutzpunktabscheidung zwischengeschaltet ist, kann der Schmutzpunktaustrag noch wesentlich verbessert werden.

Besonders vorteilhaft ist es, wenn der Schmutzpunktabscheidung zur Ascheabtrennung ein Waschprozess nachgeschaltet ist.

Werden dabei die Gutstoffströme der zumindest zwei Schmutzpunktabscheideprozesse und gegebenenfalls nachgeschalteten Wachprozesse gemeinsam einem weiteren Waschprozess (sogenannte Doppelwäsche) zugeführt, ist noch eine weitere Steigerung der Ascheabscheidung bei vermindertem Faserstoffverlust erzielbar.

Eine günstige Weiterbildung der Erfindung ist dadurch gekennzeichnet, dass der Gutstoff einer Mittelkonsistenz Schlitzsortierung zugeführt wird.

Besonders günstig hat sich erwiesen, wenn die zumindest zwei Schmutzpunktabscheideprozesse in den Kreislauf von Primärzellen zwischengeschaltet sind.

Besonders günstig ist es, wenn die Injektorpumpe eine Druckerhöhung von 1,0 bis 2,5 bar, vorzugsweise zwischen 1,2 und 1,6 bar aufweist.

Weiters betrifft die Erfindung eine Vorrichtung zur Belüftung von Suspensionen, insbesondere zur Flotation, beispielsweise beim Deinken von Faserstoffsuspensionen, mit einer oder mehreren Stufen und / oder Zellen, wobei in jeder Stufe / Zelle ein eigener, getrennter Flüssigkeitskreislauf vorgesehen ist. Diese ist erfindungsgemäß dadurch gekennzeichnet, dass ein Cleaner zwischengeschaltet ist, wobei der Cleaner in den Flüssigkeitskreislauf einer Zelle, beispielsweise einer Primär- oder Sekundärzelle und / oder zwischen den Zellenstufen, d.h. zwischen Primär- und Sekundärzellen zwischengeschaltet werden kann.

Wird erfindungsgemäß zumindest in den Kreislauf zweier Zellen je ein Cleaner zwischengeschaltet, kann die Schmutzpunktabscheidung noch wesentlich verbessert werden.

Besonders günstig ist es, wenn dem Cleaner ein Wäscher nachgeschaltet ist.

Wenn die Gutstoffströme der zumindest zwei Cleaner und gegebenenfalls nachgeschalteten Wäscher gemeinsam einem weiteren Wäscher zugeführt werden, ist noch eine weitere Steigerung der Ascheabscheidung erzielbar.

Eine weitere Reduzierung der Faserverluste bei Verkleinerung der Volumenströme aus dem Flotations-Wasch-System kann durch Nachwäsche der gesammelten Rejektströme erreicht werden.

Weiters hat sich vorteilhaft erwiesen, dass die zumindest zwei Cleaner und die gegebenenfalls nachgeschalteten Wäscher in den Kreislauf von Primärzellen zwischengeschaltet sind.

Eine günstige Ausgestaltung ergibt sich, wenn der Cleaner als (Hydro-) Zyklon bzw. als Zyklonbatterie ausgebildet ist, wobei der Zyklon bzw. die Zyklonbatterie eine Entgasungseinheit aufweisen kann.

Eine vorteilhafte Weiterbildung der Erfindung ist dadurch gekennzeichnet, dass die Injektorpumpe eine Druckerhöhung von 1,0 bis 2,5 bar, vorzugsweise zwischen 1,2 und 1,6 bar aufweist.

Vorteilhaft ist auch, dass aufgrund der erfindungsgemäßen Suspensionsreinigung die Sekundärflotation entfallen kann.

Die Erfindung wird nun anhand der Zeichnungen beispielhaft beschrieben, wobei Fig. 1 eine Flotationsanlage nach dem Stand der Technik, Fig. 2 eine Variante der Erfindung, Fig. 3 eine weitere Variante der Erfindung,

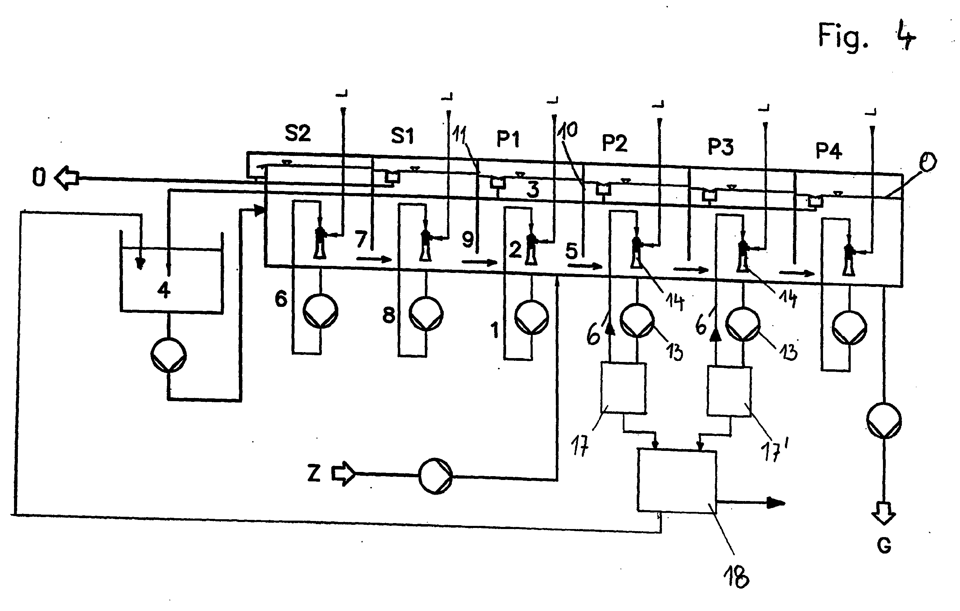

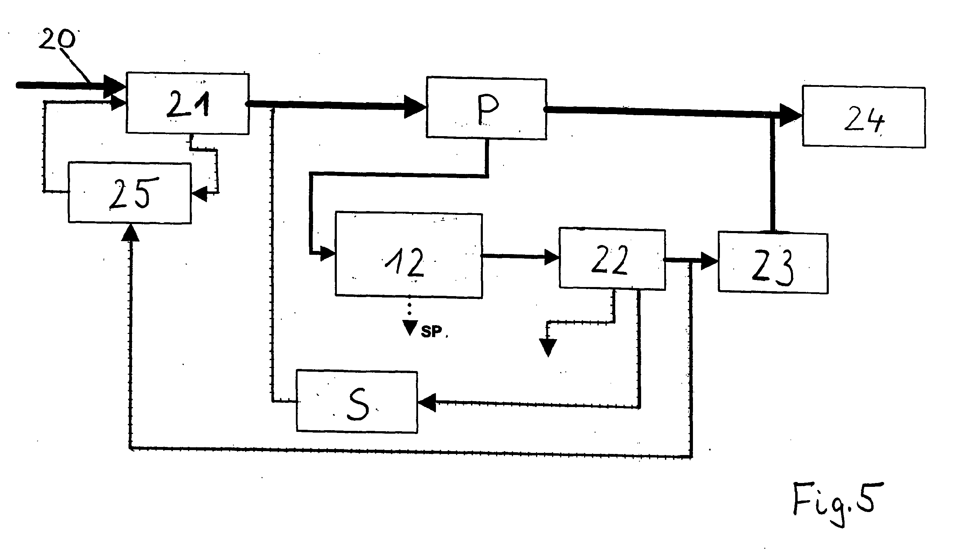

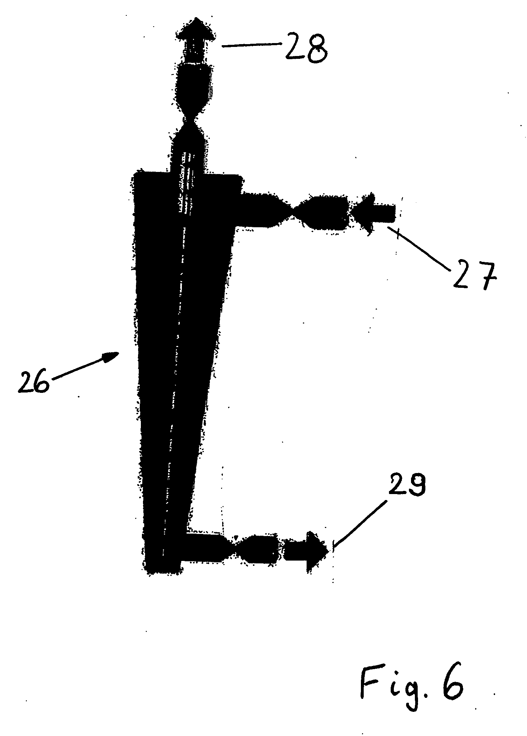

Fig. 4 eine besonders günstige Variante der Erfindung, Fig. 5 ein Schema einer Variante des erfindungsgemäßen Verfahrens, Fig. 6 eine Variante eines Cleaners darstellt.

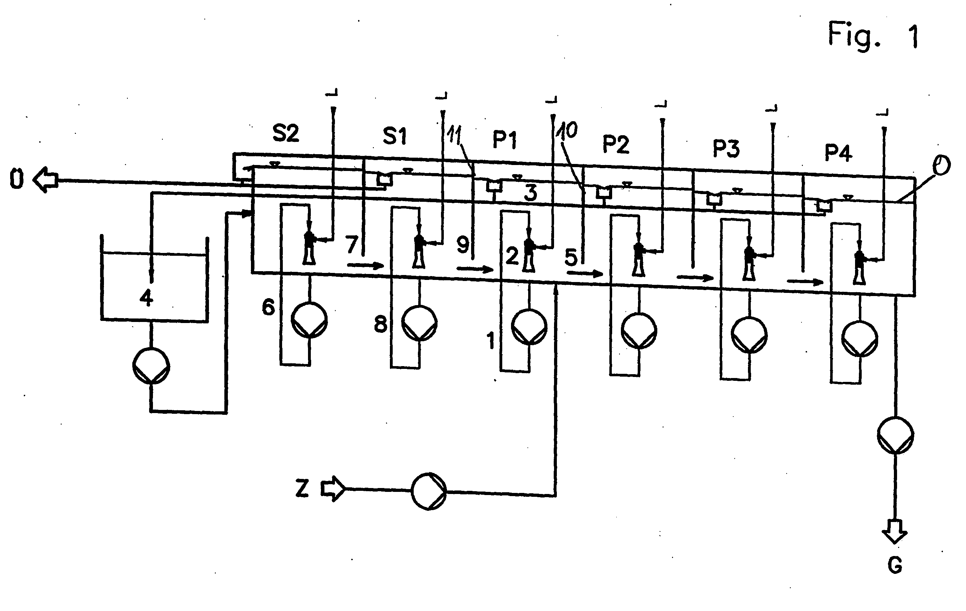

In Fig. 1 ist eine Flotationsanlage nach dem Stand der Technik mit vier Primärzellen P1, P2, P3, P4 und zwei Sekundärzellen S1, S2, schematisch dargestellt. Der Zulauf der Faserstoffsuspension Z wird an geeigneter Stelle in die erste Primärzelle P1 eingebracht. Die Blasen werden über den vom Zulauf teilweise entkoppelten Kreislauf 1 innerhalb dieser Zelle mit dem Injektor 2 durch Ansaugung von Luft L und Vermischen mit der Suspension erzeugt. Die gesamte Flotationsanlage ist zum überwiegenden Teil mit Suspension gefüllt, an deren Oberfläche O sich ein Schaum bildet, der einen möglichst großen Teil der auszuflotierenden Stoffe und Druckfarbenpartikel enthält. Der von Druckfarben und Störstoffen in der ersten Primärzelle P1 gereinigte Gutstoff tritt durch eine am Boden angeordnete Öffnung 5 in der Trennwand 10 zur zweiten Primärzelle P2 über. Dort und in allen weiteren Primärzellen wird die Suspension in gleicher Weise, mit Blasenerzeugungsinjektoren, die durch zelleninterne Kreisläufe betrieben werden, behandelt und tritt am Ende der Anlage als Gutstoff G aus. Der gesammelte Schaum aller Primärzellen P1 bis P4 kann über eine Schaumrinne 3 in einen Behälter 4 abfließen. Aus diesem Zwischen-behälter 4 wird der inzwischen weitgehend entschäumte Überlauf in die Sekundärzelle S2 eingebracht. Die Begasung erfolgt dort wieder um den zelleninternen Kreislauf 6. Der Übertritt des Gutstoffes der Sekundärzelle S2 in die Sekundärzelle S1 erfolgt durch die am Boden angeordnete Öffnung 7. Nach der Begasung mittels Kreislaufs 8 kann der Schaum der Sekundärzellen als Überlauf Ü abgeführt werden. Der Gutstoff der Sekundärzelle S1 gelangt durch die am Boden angeordnete Öffnung 9 in der Trennwand 11 in die erste Primärzelle P1.

Grundsätzlich kann die Schmutzpunktabscheidestufe erfindungsgemäß an mehreren Stellen zwischengeschaltet werden. Sie kann in den Kreislauf einer Primärzelle, einer Sekundärzelle oder zwischen die Primär- und

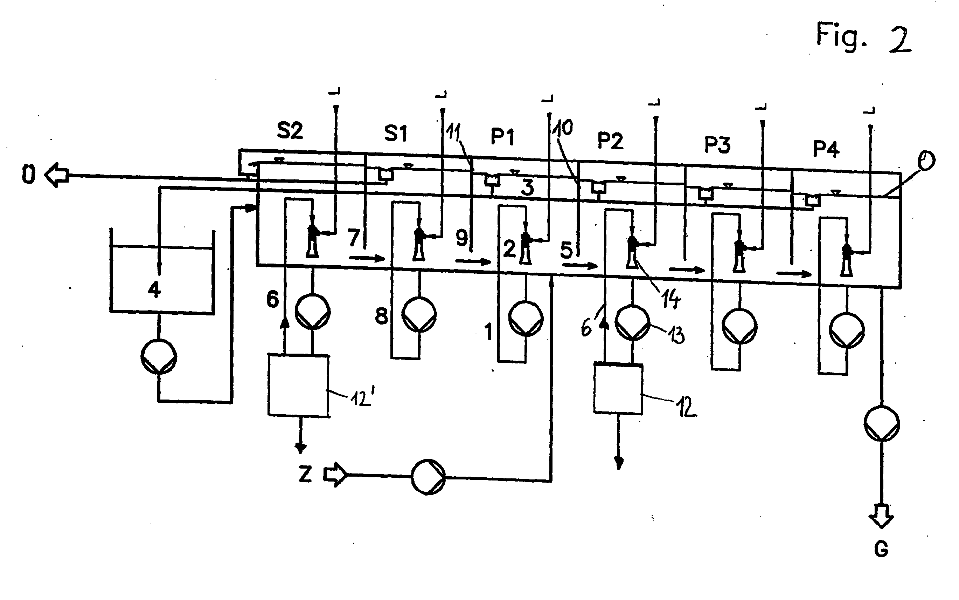

Sekundärstufe geschaltet werden. In Fig. 2 wird die Zwischenschaltung in eine Primärstufe und in eine Sekundärstufe dargestellt. Der Schmutzpunktabscheider (Cleaner) 12 wird je nach gewünschter Prozessführung und Anforderungen an den Reinigungsgrad bei einer der Primärzellen (P1, P2, P3, P4) installiert. Alternativ bzw. auch zusätzlich kann eine Schmutzpunktabscheidung (Cleaner) 12' in den Kreislauf einer Sekundärzelle (S1, S2) zwischengeschaltet werden. Beispielhaft ist in Fig. 2 ein Schmutzpunktabscheider (Cleaner) 12 an der P2 und ein Cleaner 12' an der S2 dargestellt. Der Cleaner 12, 12' wird nach einer der Injektorpumpen 13 installiert. Gegenüber dem Stand der Technik besitzt bei der Erfindung die Injektorpumpe 13 eine höhere Druckleistung bei gleichem Durchsatz, da der hohe Druckabfall (0,8 bis 2,0 bar, vorzugsweise 1,2 bis 1,6 bar) des zwischengeschalteten Hydrozyklons überwunden werden muss. In Kombination mit einem Hydrozyklon kann eine Entaschungsstufe geschalten werden. Im Prozessablauf wird der Zyklon vorteilhafterweise vor der Entaschungsmaschine installiert. Zur Erhöhung der Schmutzpunkteabscheidewirkung im Zyklon sollte beim Einsatz von konventionellen Schwerteilcleanern die Suspension entlüftet werden. Werden sogenannte Entgasungscleaner verwendet, ist die Leichtteilabscheidung von besonderer Bedeutung. Je nach Rohstofftype und Schmutzpunktecharakter kann der hohe Suspensionsluftgehalt die Schmutzpunktabscheidung unterstützen (Zentrifugalflotation). Ein Teilstrom der Flüssigkeit wird in Bodennähe der Zelle P2, S2 vor Abfluss in die Folgezelle abgezogen und tritt nach Schmutzpunktabscheidung im Cleaner 12, 12' und Einstellung der Stoffdichte über den Diffusor 14, 14' in die gleiche Zelle ein. Es besteht auch die Möglichkeit bei mehreren Zellkammern einen Cleaner zwischenzuschalten. Die im Cleaner 12, 12' abgeschiedenen Stoffe werden einer Kläranlage zugeleitet. Der Abscheidegrad kann mit den üblichen Apparateparametern eingestellt werden. Durch die produktionsunabhängige Einstellung des Injektordurchlaufes gemäß dem Stand der Technik in Fig. 1 wird auch eine Abstimmung des Abscheidegrades im Fertigstoff ermöglicht.

Wird erfindungsgemäß eine Vorwärtsschaltung des gesamten Produktionsstromes erwünscht oder eine Wäsche in eine bereits vorhandene DIP Anlage nachinstalliert, kann der Gesamtstrom auch zwischen den Zellen entascht werden. Zur Erhaltung der Flotationseffizienz ist der Kreislaufstrom zu öffnen und vorteilhafterweise auf ca. 0,8 bis 1,3 % Stoffkonsistenz nachzuverdünnen

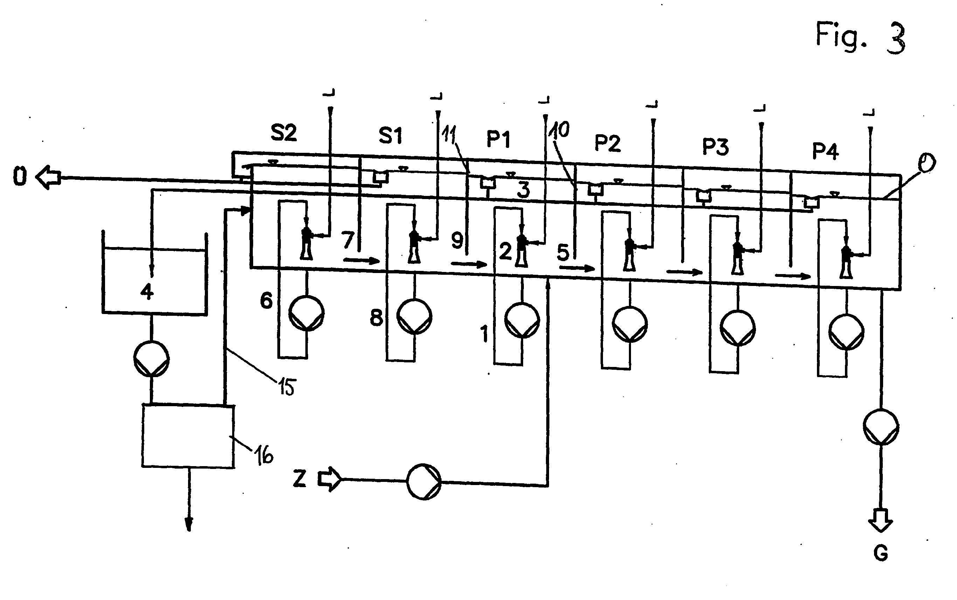

In Fig. 3 wird der Zulaufstrom 15 zur Sekundärzelle mit einem Cleaner 16 als Schmutzpunktabscheidevorrichtung behandelt, so dass die hydraulische Belastung der Sekundärzellen durch die Entfernung von Schmutzpunkt- und Druckfarbpartikeln reduziert wird. Wesentlich dabei ist aber die gezielte Entfernung der Schmutzpunkte. Die in Fig. 3 dargestellte Variante zeigt die wirksamste Form der Teilstrombehandlung, da beim Flotationsprozess im Schaum bereits eine starke Anreicherung der mineralischen Inhaltsstoffe und Schmutzpunkte stattfindet. Die Zwischenschaltung von Cleanern in dieser Position erlaubt bei hydraulisch kleinen, aber hochbeladenen Rejektströmen eine sichere und effiziente Ausschleusung von Schmutzpartikeln mit positiver Verstärkung der Ascheabscheidung.

Bei der Schmutzpunktabscheidung wird der Gutstoff eingedickt. Damit die Stoffdichte bei der Sekundärflotation nicht zu hoch ist, wird die Faserstoffsuspension im Normalfall auf ca. 0,6 bis 1,4 % Stoffdichte verdünnt. Dieser Vorgang ist bei allen Abscheideprozessen innerhalb der Flotation notwendig.

Eine weitere Möglichkeit der Schmutzpunktabscheidung ist in Fig. 4 dargestellt. Hier wird in zwei Teilströmen abgeschieden. Zur weiteren Reduktion der Faserverluste werden die Cleaner 17, 17' in Kaskade geschaltet. Dabei kann den Cleanern 17, 17' jeweils noch ein Wäscher zur Entaschung nachgeschaltet sein. Der an Füllstoffen verarmte Gutstoff aus dem weiteren Wäscher 18 wird in den Flotationsschaumbehälter 4 geführt und gemeinsam mit dem Überlaufschaum der Primärzellen in den Sekundärzellen nachflotiert. Das Rejekt, das mit Füll- und Feinstoffen stark angereichert ist, wird über eine nachgeschaltete DAF (Dissolved Air Flotation) oder eine Schlammpresse entsorgt.

Fig. 5 stellt das Schema einer Variante der Schmutzpunktabscheidung dar. Die zu reinigende Faserstoffsuspension wird bei 20 einer Mittelkonsistenzschlitzsortierung 21 unterworfen bevor sie der Primärstufe P einer Flotation zugeführt wird. In den Kreislauf 6 ist eine Hydrozyklonstufe 12 geschaltet, die ein- oder mehrstufig sein kann und gegebenenfalls auch eine Entgasungseinheit aufweisen kann. Die ausgeschiedenen Schmutzpunkte und Druckfarbpartikel werden bei SP aus dem System ausgetragen. Zur optimalen Reinigung wird eine Wäsche 22 zur Ascheabscheidung nachgeschaltet. Der Gutstoff wird fallweise über eine Mittelkonsistenz Schlitzsortierung wieder dem Gutstoffstrom zugeführt, der in weiterer Folge einer Niederkonsistenz Schlitzsortierung zugeleitet wird. Gegebenenfalls wird der Rejektstrom der Wäsche noch einer Sekundärstufe S einer Flotation zugeführt. Bei guter Reinigung - abhängig vom jeweiligen Rohstoffcharakter - kann diese Stufe aber auch gänzlich entfallen. Alternativ kann die Suspension auch zu einer 2 Stufe 25 einer Mittelkonsistenz Schlitzsortierung zugeleitet und von dort vor der Mittelkonsistenz Schlitzsortierung 1. Stufe 21 der Faserstoffsuspension 20 zugemischt werden.

Fig. 6 zeigt eine Variante eines Cleaners in Form eines Hydrozyklons 26. Der Zulauf 27 erfolgt tangential, wobei der Gutstoff 28 dann axial abgezogen wird. Das Rejekt 29, das mit Schmutzpunkten und Druckfarbpartikel stark angereichert ist wird am Boden des Hydrozyklons 26 abgeführt. Üblicherweise werden eine Reihe von derartigen Zyklonen 26 zusammengeschaltet, wobei auch eine horizontale Anordnung und ein Zusammenschalten von jeweils zwei Hydrozyklonen vorgesehen sein kann.

Durch die Entfernung eines großen Prozentsatzes des Füllstoffanteiles und der zusätzlichen Entfernung von kleinen Druckpartikel aus dem Produktionsstrom steigt der Weißegrad oder die Helligkeit mit an.

## Patentansprüche

1. Verfahren zur Belüftung von Suspensionen, insbesondere zur Flotation, beispielsweise beim Deinken von Faserstoffsuspensionen, mit einer oder mehr Stufen und / oder Zellen, wobei in jeder Stufe / Zelle ein eigener, getrennter Flüssigkeitskreislauf vorgesehen ist, **dadurch gekennzeichnet, dass** aus mindestens einem Flüssigkeitskreislauf die Schmutzpunkte selektiv abgeschieden werden.

2. Verfahren nach Anspruch 1, **dadurch gekennzeichnet, dass** die Schmutzpunktabscheidung in den Flüssigkeitskreislauf einer Zelle, beispielsweise einer Primär- oder Sekundärzelle, zwischengeschaltet wird.

3. Verfahren nach Anspruch 1, **dadurch gekennzeichnet, dass** die Schmutzpunktabscheidung zwischen den Zellenstufen, d.h. zwischen Primär- und Sekundärzellen zwischengeschaltet wird.

4. Verfahren nach Anspruch 3, **dadurch gekennzeichnet, dass** die Faserstoffsuspension vor Eintritt in die Sekundärzellen auf ca. 0,4 - 1,7 % Stoffdichte, insbesondere 0,8 - 1,3 % Stoffdichte, verdünnt wird.

5. Verfahren nach einem der Ansprüche 1 bis 4, **dadurch gekennzeichnet, dass** zumindest in den Kreislauf zweier Zellen je eine Schmutzpunktabscheidung zwischengeschaltet ist.

6. Verfahren nach einem der Ansprüche 1 bis 5, **dadurch gekennzeichnet, dass** der Schmutzpunktabscheidung zur Ascheabtrennung ein Waschprozess nachgeschaltet ist.

7. Verfahren nach Anspruch 5 oder 6, **dadurch gekennzeichnet, dass** die Gutstoffströme der zumindest zwei Schmutzpunktabscheideprozesse und gegebenenfalls nachgeschalteten Waschprozesse gemeinsam einem weiteren Waschprozess zugeführt werden.

8. Verfahren nach Anspruch 6 oder 7, **dadurch gekennzeichnet, dass** der Gutstoff einer Mittelkonsistenz Schlitzsortierung zugeführt wird.

9. Verfahren nach einem der Ansprüche 5 bis 7, **dadurch gekennzeichnet, dass** die zumindest zwei Schmutzpunktabscheidungen in den Kreislauf von Primärzellen zwischengeschaltet sind.

10. Verfahren nach einem der Ansprüche 1 bis 9, **dadurch gekennzeichnet, dass** die Injektorpumpe eine Druckerhöhung von 1,0 bis 2, 5 bar, vorzugsweise zwischen 1,2 und 1,6 bar, aufweist.

11. Vorrichtung zur Belüftung von Suspensionen, insbesondere zur Flotation, beispielsweise beim Deinken von Faserstoffsuspensionen, mit einer oder mehreren Stufen und / oder Zellen (P1, P2, P3, P4, S1, S2), wobei in jeder Stufe / Zelle (P1, P2, P3, P4, S1, S2) ein eigener, getrennter Flüssigkeitskreislauf (6) vorgesehen ist, **dadurch gekennzeichnet**, dassein Cleaner (12, 12') zwischengeschaltet ist.

12. Vorrichtung nach Anspruch 11, **dadurch gekennzeichnet, dass** der Cleaner (12, 12') in den Flüssigkeitskreislauf einer Zelle (P1, P2, P3, P4, S1, S2), beispielsweise einer Primär- oder Sekundärzelle, zwischengeschaltet wird.

13. Vorrichtung nach Anspruch 12, **dadurch gekennzeichnet, dass** der Cleaner (16) zwischen den Zellenstufen, d.h. zwischen Primär- und Sekundärzellen zwischengeschaltet wird.

14. Vorrichtung nach einem der Ansprüche 11 bis 13, **dadurch gekennzeichnet, dass** zumindest in den Kreislauf (6) zweier Zellen je ein Cleaner (12, 12') zwischengeschaltet ist.

15. Vorrichtung nach einem der Ansprüche 11 bis 14, **dadurch gekennzeichnet, dass** dem Cleaner (12, 12') ein Wäscher nachgeschaltet ist.

16. Vorrichtung nach Anspruch 14 oder 15, **dadurch gekennzeichnet, dass** die Gutstoffströme der zumindest zwei Cleaner bzw. der gegebenenfalls nachgeschalteten Wäscher gemeinsam einem Wäscher (18) zugeführt werden.

17. Vorrichtung nach einem der Ansprüche 14 bis 16, **dadurch gekennzeichnet, dass** die zumindest zwei Cleaner (17, 17') und die gegebenenfalls nachgeschalteten Wäscher in den Kreislauf (6) von Primärzellen (P1, P2, P3, P4) zwischengeschaltet sind.

18. Vorrichtung nach einem der Ansprüche 11 bis 17, **dadurch gekennzeichnet, dass** der Cleaner (12, 12', 16, 17, 17') als (Hydro-) Zyklon bzw. als Zyklonbatterie ausgestaltet ist.

19. Vorrichtung nach Anspruch 18, **dadurch gekennzeichnet, dass** der Zyklon bzw. die Zyklonbatterie eine Entgasungseinheit aufweist.

20. Vorrichtung nach einem der Ansprüche 11 bis 19, **dadurch gekennzeichnet, dass** die Injektorpumpe (2) eine Druckerhöhung von 1,0 bis 2, 5 bar, vorzugsweise zwischen 1,2 und 1,6 bar, aufweist.

21. Vorrichtung nach den Ansprüchen 11 bis 20, **dadurch gekennzeichnet dass** aufgrund der vorteilhaften Suspensionsreinigung die Sekundärflotation entfällt.
